# EUROPÄISCHE PATENTSCHRIFT

(11) **EP 3 696 875 B1**
(45) Veröffentlichungstag und Bekanntmachung des Hinweises auf die Patenterteilung: **23.12.2020**
(21) Anmeldenummer: 19156664.5
(22) Anmeldetag: 12.02.2019
(51) Int. Cl.: H01M 2/02, H01M 2/10, B05B 1/08, B05B 1/30, B05B 9/00, B05B 9/04, B05B 15/555, B05C 5/02, B05C 9/04, B05D 1/26, B05C 11/10, B05C 15/00, B05D 3/06

(54) **VERFAHREN ZUR AUFBRINGUNG EINER ISOLATIONSSCHICHT AUF EINER KFZ-BATTERIEZELLE UND BESCHICHTUNGSSTATION SOWIE BESCHICHTUNGSANLAGE ZUR DURCHFÜHRUNG DES VERFAHRENS**
METHOD FOR APPLYING AN INSULATING LAYER ON A MOTOR VEHICLE BATTERY CELL AND COATING STATION AND COATING INSTALLATION FOR PERFORMING THE METHOD
PROCÉDÉ D'APPLICATION D'UNE COUCHE D'ISOLATION SUR UN ÉLÉMENT DE BATTERIE D'UN VÉHICULE ET UNE STATION DE REVÊTEMENT AINSI QU'INSTALLATION DE REVÊTEMENT DESTINÉE À LA MISE EN UVRE DUDIT PROCÉDÉ

(43) Veröffentlichungstag der Anmeldung: 19.08.2020
(73) Patentinhaber: IPR-Intelligente Peripherien für Roboter GmbH, 75031 Eppingen (DE)
(72) Erfinder: Doll, Fredy, 77855 Achern (DE); Woll, Bernhard, 71729 Erdmannhausen (DE)
(74) Vertreter: Patentanwaltskanzlei Cartagena

(56) Entgegenhaltungen:
- EP-A1- 0 837 514
- DE-A1-102013 206 283
- JP-A- 2010 194 399
- US-A1- 2016 329 534
- BRIAN DERBY ED - BRIAN DERBY: "Inkjet Printing of Functional and Structural Materials: Fluid property Requirements, feature Stability, and Resolution", ANNU. REV. MATER. RES,, Bd. 40, 9. März 2010 (2010-03-09), Seiten 395-414, XP002788902, DOI: 10.1146/ANNUREV-MATSCI-070909-104502

## Beschreibung

### ANWENDUNGSGEBIET UND STAND DER TECHNIK

Die Erfindung betrifft den Bereich der Beschichtung von Batteriezellen, insbesondere der Beschichtung von Kfz-Batteriezellen, von denen eine Mehrzahl zur Bildung einer Kfz-Batterie zusammengefügt wird. Um bei einer solchen Kfz-Batterie zu vermeiden, dass ein Schaden an einer Batteriezelle sich auf benachbarte Batteriezellen oder benachbarte Batterien auswirkt, ist es bekannt, die Batteriezellen mit einer elektrisch isolierenden Beschichtung zu versehen. Derartiges ist beispielsweise in der WO 2018/082989 A1 beschrieben.

Auch ist es aus der DE 102015205481 A1 bereits bekannt, Batteriezellen einzeln zu beschichten und hierbei einen unter UV-Licht aushärtbaren Lack zu verwenden.

Bislang wird das flüssige Beschichtungsmaterial üblicherweise in Form eines vernebelten Sprühstrahls auf die Oberflächen des Gehäuses der Batteriezelle aufgebracht. Als problematisch bei der derartigen Aufbringung der Beschichtung hat sich der erforderliche Aufwand erwiesen, der ähnlich einer Kfz-Lackieranlage eine aufwändige Isolation des Beschichtungsbereichs sowie einen hohen Reinigungsaufwand der Anlagen aufgrund eines entweichenden Tröpfchennebels mit sich bringt. Auch ist der Verlust von flüssigem Beschichtungsmaterial, welches ungenutzt entweicht, unter ökologischen und ökonomischen Gesichtspunkten nachteilig.

Aus der DE 102013206283 A1 sind ein Verfahren zum Applizieren von Beschichtungsmaterial und eine Appliziervorrichtung bekannt, wobei das Verfahren und die Vorrichtung insbesondere der Herstellung von Dichtungsbauteilen dienen.

Weiterer Stand der Technik, der technologischen Hintergrund für die vorliegende Erfindung darstellt, ist aus der JP 2010-194399 A, der WO 97/00441 A1 und der US 2016/0329534 A1 sowie aus dem Artikel "Inkjet Printing of Functional and Structural Materials" von Bryan Derby (XP-002788902) bekannt.

### AUFGABE UND LÖSUNG

Aufgabe der Erfindung ist es, ein Verfahren zur Verfügung zu stellen, das die Nachteile des Standes der Technik vermindert.

Vorgeschlagen wird hierfür ein Verfahren zur Aufbringung einer außenseitigen Isolationsschicht auf dem Gehäuse einer Batteriezelle, bei dem die Beschichtung mit einem flüssigen elektrisch isolierenden Beschichtungsmaterial und unter Verwendung eines Beschichtungsapplikators durch Aufbringung diskret erzeugter Einzeltropfen des Beschichtungsmaterials erfolgt. Dabei bilden die Einzeltropfen beim Aufprall auf einer Außenfläche des Gehäuses Beschichtungspunkte, welche mittels des Beschichtungsapplikators sequentiell aneinander angrenzend oder überlappend aufgebracht werden, so dass sie gemeinsam Beschichtungslinien bilden.

Das erfindungsgemäße Verfahren, welches mit der Funktionsweise eines Tintenstrahldruckers verwandt ist, basiert darauf, dass kein undefinierter Nebel oder Sprühstrahl und kein kontinuierlicher Materialstrom Verwendung findet, sondern stattdessen das flüssige Beschichtungsmaterial in Form einzelner Einzeltropfen mit definierter einheitlicher Austragrichtung sequentiell ausgetragen wird. Diese Einzeltropfen werden bei Relativbewegung des verwendeten Applikators gegenüber der Außenfläche des vorzugsweise prismatischen Batteriezellengehäuses ausgetragen und bilden eine Spur von bündig zueinander oder überlappend angeordneten Beschichtungspunkte und somit eine Beschichtungslinie.

Diese Beschichtungslinie kann bei geeigneter Anpassung der Austragsparameter, Genauigkeit der Relativbewegung und gleichbleibenden Materialeigenschaften zielgenau auf die üblicherweise planen und rechteckigen Außenflächen bis zum Rand hin aufgebracht werden, ohne dass in nennenswertem Umfang Beschichtungsmaterial an der jeweiligen Fläche vorbei ausgetragen wird und den Fertigungsbereich verschmutzt.

Die Ausrichtung des Applikators und somit die Ausbringungsrichtung der Einzeltropfen erfolgt vorzugsweise in Richtung des Normalenvektors der zu beschichtenden Fläche. Im Falle von Kanten zwischen gegeneinander angewinkelten Außenflächen kann es jedoch auch zweckmäßig sein, die Ausbringung der Einzeltropfen auf solche Kanten in einem Winkel erfolgen zu lassen, der zwischen den Normalenwinkeln der jeweilig angrenzenden Außenflächen liegt.

Das Beschichtungsmaterial ist ein flüssiges Beschichtungsmaterial, das im ausgehärteten Zustand elektrisch isolierend wirkt. Vorzugsweise umfasst es mindestens eine unter Strahlung, insbesondere unter UV-Strahlung, aushärtende Komponente. Alternativ kann es eine durch Polyaddition oder Polykondensation aushärtende Komponente umfassen. Auch kann das Beschichtungsmaterial eine Komponente umfassen, die sowohl durch Polyaddition oder Polykondensation aushärtet als auch Strahlung zum Aushärten benötigt.

Bei einem Beschichtungsmaterial mit einer unter Strahlung aushärtenden Komponente kommt als Strahlung zum Aushärten insbesondere UV-Strahlung aber ggf. auch Elektronenstrahlung in Frage. Die unter Strahlung aushärtende Komponente ist bevorzugt mindestens ein Acrylat, mindestens ein Epoxid oder mindestens ein Enolether. Das mindestens eine Acrylat ist als die unter Strahlung aushärtende Komponente besonders bevorzugt. Es kann bevorzugt sein, dass das Beschichtungsmittel neben der unter Strahlung aushärtenden Komponente eine Lösemittelkomponente umfasst. Das Lösemittel ist auf die unter Strahlung aushärtende Komponente abzustimmen. In bevorzugten Ausführungsformen umfasst die unter Strahlung aushärtende Komponente mindestens einen Reaktivverdünner, gegebenenfalls zusätzlich zu der Lösemittelkomponente, besonders bevorzugt aber auch als Ersatz für die Lösemittelkomponente. Unter einem Reaktivverdünner versteht man bekanntlich einen Stoff, der die Viskosität eines Beschichtungsmaterials für die Verarbeitung herabsetzt und bei der anschließenden Härtung des Lackes Teil des Lackes wird, meist in Folge einer Copolymerisation. Ein übliches Lösemittel nimmt im Gegensatz dazu nicht an chemischen Reaktionen Teil und muss in der Regel nach Abschluss einer Reaktion entfernt werden. Wenn die unter Strahlung aushärtende Komponente ein Acrylat umfasst, so sind als Reaktivverdünner beispielsweise Dipropylenglykoldiacrylat, Tripropylenglykoldiacrylat, Tetrahydrofurfurylacrylat, Isobornylacrylat, Isodecylacrylat, Ethylenethylacrylat, Hexandioldiarcylat, Tricyclodecandimethanoldiacrylat, propoxyliertes Neopentylglykoldiacrylat und propoxylyliertes Trimethylolpropantriacrylat geeignet. Beispielsweise kann das Beschichtungsmaterial eine Kombination aus Isobornylacrylat und Tricyclodecandimethanoldiacrylat umfassen. In einigen besonders bevorzugten Ausführungsformen umfasst das Beschichtungsmaterial den mindestens einen Reaktivverdünner nicht zusätzlich zu dem mindestens einen Acrylat, sondern als das mindestens eine Acrylat. Mit anderen Worten, das Beschichtungsmaterial umfasst als strahlungsvernetzbare Bestandteile dann im Wesentlichen nur einen oder mehrere Reaktivverdünner. Neben den genannten Bestandteilen kann das Beschichtungsmaterial mindestens ein Additiv, insbesondere einen Photoinitiator, umfassen, beispielsweise ein geeignetes Phosphinoxid.

Im Falle eines Beschichtungsmaterials mit einer durch Polyaddition oder Polykondensation aushärtenden Komponente wird zur Aushärtung keine Strahlung benötigt, allerdings kann die Aushärtung im Einzelfall etwa durch Erwärmung initiiert oder gefördert werden. Als eine solche Komponente kommt insbesondere eine hydroxyfunktionelle Komponente mit einem isocyanatfunktionellen Härter in Frage, also eine zur Herstellung von Polyurethanen verwendbare Komponente. Die hydroxyfunktionelle Komponente ist meist ein Polyol, insbesondere ausgewählt aus der Gruppe mit Polyesterpolyol, Polyetherpolyol, Acrylatpolyol. Der Härter ist beispielsweise m-Tolylidendiisocyanat oder Isophorondiisocyanat.

Beschichtungsmaterialien mit einer Komponente, die sowohl durch Polyaddition oder Polykondensation aushärtet als auch Strahlung zum Aushärten benötigt, sind als Dual-Cure-Beschichtungsmittel bekannt. Sie werden zum Aushärten in der Regel erwärmt und bestrahlt. Gut geeignet hierfür sind beispielsweise Urethanacrylate, die mit einem Härter wie Isophorondiisocyanat eine Polyadditionsreaktion eingehen können. Anschließend werden sie durch Strahlung endgehärtet.

Da die für das erfindungsgemäße Verfahren in Frage kommenden Beschichtungsmaterialien meist bei Raumtemperatur eine für die vorgeschlagene Art der Ausbringung ungünstig hohe Viskosität aufweisen, wird es also bevorzugt angesehen, wenn das Beschichtungsmaterial vor dem Austrag auf eine Temperatur zwischen 35 °C und 45 °C erwärmt wird, vorzugsweise mittels einer im Beschichtungsapplikator vorgesehenen Heizeinrichtung.

Vorzugsweise werden mittels des Verfahrens nicht nur aus Beschichtungspunkten zusammengefügte Beschichtungslinien auf der Außenfläche aufgebracht, sondern ermöglichen eine flächige Beschichtung, indem eine Vielzahl von Beschichtungslinien sequentiell nebeneinander aufgebracht werden und somit eine zusammenhängende Beschichtungsfläche bilden. Grundsätzlich ist es aber auch denkbar, größere Flächen des Gehäuses mit konventionellen Mitteln zu beschichten und nur besondere Bereiche wie Kantenbereiche mit Beschichtungslinien gemäß dem erfindungsgemäßen Verfahren zu versehen.

Zur Beschichtung von größeren Flächen mittels Einzelpunkten werden mehrere Beschichtungslinien überlappend oder angrenzend nebeneinander aufgebracht. Dabei ist es meist von Vorteil, wenn die einzelnen Beschichtungslinien parallel zur längsten Erstreckung der jeweils zu beschichtenden Fläche ausgerichtet sind, da sich so die kürzeste Beschichtungszeit erzielen lässt.

Ja nach Art der Positionierung des zu beschichtenden Gehäuses ist die zu beschichtende Fläche üblicherweise horizontal oder vertikal ausgerichtet. Im Falle einer vertikal ausgerichteten Fläche kann die flächige Beschichtung mittels horizontalen Beschichtungslinien erfolgen, wobei diese dabei vorzugsweise nacheinander von oben nach unten aufgebracht werden. Es hat sich gezeigt, dass sich hierdurch gegenüber einer Aufbringung von unten nach oben eine einheitlichere Beschichtungsdicke und somit eine höhere Beschichtungsqualität als bei einer Beschichtung von unten nach oben erzielen lässt. Alternativ kann bei vertikaler Ausrichtung der zu beschichtenden Fläche vorgesehen sein, dass die die Beschichtungslinien vertikal ausgerichtet aufgebracht werden.

Üblicherweise sind mehrere Außenflächen eines Gehäuses zu beschichten, meist insgesamt fünf Seiten, so dass nur eine Oberseite, an der Polelemente vorgesehen sind, unbeschichtet bleibt. Um dies in möglichst kurzer Zeit zu ermöglichen, ist vorzugsweise vorgesehen, dass die Beschichtung von zwei einander gegenüberliegenden Außenflächen zeitgleich mittels zweier Beschichtungsapplikatoren erfolgt.

Die Verwendung zweier Applikatoren halbiert die Beschichtungszeit für die betroffenen Flächen. Der Aufwand zur Handhabung solcher zweier Applikatoren ist vergleichsweise gering, da die Bewegung beider Applikatoren oder grundsätzlich auch von mehr als zwei Applikatoren mit nur einem Verlagerungssystem, insbesondere nur einem Roboter, möglich ist.

Das Gehäuse wird während der Beschichtung vorzugsweise von einem Werkstückhalter gehalten. Diese kann insbesondere derart ausgestaltet sein, dass er die Batteriezelle mittels Halteelementen an den Polelementen ergreift. Hier ist eine Beschichtung üblicherweise nicht gewünscht. Die Werkstückhalter an den Polelementen bewirken neben der Fixierung der Batteriezelle auch einen zusätzlichen Schutz der Polelemente gegen Spritzer der Beschichtungsflüssigkeit.

Es kann beim erfindungsgemäßen Verfahren vorgesehen sein, dass die Relativverlagerung des Applikators gegenüber dem Gehäuse nur oder auch auf einer Verlagerung des Gehäuses während der Bearbeitung basiert. Hierfür kann der Werkstückhalter insbesondere um eine Hochachse drehbar gegenüber einer feststehenden Basis oder einem Fördersystem wie einem Rundtisch ausgebildet sein.

Der Austrag erfolgt beim erfindungsgemäßen Verfahren vorzugsweise mittels eines Beschichtungsapplikators, der eine Düsenkammer und eine sich daran stromabwärts anschließende Düsenöffnung sowie einen verlagerbaren Stößel aufweist, der periodisch entlang seiner Längsachse in die Düsenkammer einrückt und dabei deren Inhalt als diskreten Einzeltropfen durch die Düsenöffnung drückt. Geeignete Beschichtungsapplikatoren sind beispielsweise von der Firma Vermes Microdispensing GmbH in Otterfing, Deutschland, erhältlich.

Der genannte Stößel, der vorzugsweise mittels Piezoaktoren, insbesondere Piezostacks, in periodische Bewegungen versetzt wird, bewegt sich vorzugsweise während des Austrags mit einer Frequenz zwischen 100 Hz bis 1000 Hz, vorzugsweise zwischen 200 Hz und 400 Hz. Diese Werte entsprechen bei einem Applikator mit einer Düsenöffnung damit gleichzeitig der Zahl der Einzeltropfen, die ausgebracht werden und einzelne Beschichtungspunkte auf Oberfläche hinterlassen.

Wenngleich ein Beschichtungsapplikator zur Verwendung beim erfindungsgemäßen Verfahren typischerweise nur eine Düsenöffnung aufweist, sind auch Gestaltungen mit mehreren gleich ausgerichteten Düsenöffnungen möglich, so dass diese mehrere parallele Beschichtungslinien simultan auf der gleichen Oberfläche aufbringen können. In einem solchen Fall kann der Beschichtungsapplikator separate Stößel aufweisen, die insbesondere mit separaten Piezostacks angetrieben werden. Es ist aber auch denkbar, dass mehrere Stößel eine gemeinsame Stößeleinheit bilden, die mittels gemeinsamer Piezostacks angetrieben wird und deren Stößel dadurch in unterschiedliche und separat gespeiste Düsenkammern einrücken.

Alternativ zur Verwendung eines Stößels ist es grundsätzlich auch möglich, dass die Ausbringung des Beschichtungsmaterials ähnlich der im Tintenstrahldruckbereich bekannten Bubblejet-Technologie durch Heizelemente bewirkt wird, die eine Dampfblase erzeugen und hierdurch das Beschichtungsmaterial aus der Düsenkammer austreiben.

Die Beschichtung erfolgt vorzugsweise mit Einzeltropfen, die ein Tropfenvolumen zwischen 0,2 mm³ und 1,0 mm³ aufweisen. Die konkrete Tropfengröße wird insbesondere durch den Hub des periodischen bewegten Stößels beeinflusst. Die entstehenden Beschichtungspunkte weisen vorzugsweise an ihrer dicksten Stelle eine Dicke zwischen 50 µm und 100 µm auf, wobei sie vorzugsweise derart zur Bildung von Beschichtungslinien bzw. Beschichtungsflächen überlappend angeordnet werden, dass sich eine mittlere Schichtdicke zwischen 60 µm und 120 µm ergibt. Der Durchmesser der einzelnen Beschichtungspunkte liegt vorzugsweise zwischen 1 mm und 2 mm.

Die Beschichtung erfolgt vorzugsweise durch eine Düsenöffnung mit einem Düsendurchmesser zwischen 0,2 mm und 0,8 mm, vorzugsweise von 0,5 mm. Die Beschichtung erfolgt weiterhin vorzugsweise bei einem Abstand zwischen der Düsenöffnung und der zu beschichtenden Außenfläche zwischen 3 mm und 8 mm, vorzugsweise zwischen 4 mm und 6 mm.

Die Zuführung des Beschichtungsmaterials in die Düsenkammer erfolgt vorzugsweise mit einem Druck zwischen 3 bar und 5 bar. Ein zu geringer Druck begünstigt ebenso wie eine zu schnelle Rückzugsbewegung des Stößels das Einsaugen von Luft, wenn der Stößel aus der Düsenkammer ausrückt, so dass ein Zuführdruck im genannten Bereich bevorzugt wird. Wird der Druck zu hoch gewählt, so kann es dazu kommen, dass der Einzeltropfen bei der Abgabe zerrissen wird und die Beschichtung inhomogen wird.

Die Relativgeschwindigkeit zwischen Beschichtungsapplikator und einer Außenfläche während der Ausbringung des Beschichtungsmaterials ergibt sich aus den genannten Parametern und beträgt vorzugsweise zwischen 300 mm/sec und 700 mm/sec.

Zur Durchführung des beschriebenen Verfahrens wird eine Beschichtungsstation zur Aufbringung einer außenseitigen Isolationsschicht auf dem Gehäuse einer Batteriezelle vorgeschlagen, die über mindestens einen automatisiert verfahrbaren Beschichtungsapplikator verfügt, der zur Ausbringung des Beschichtungsmaterials in Form diskreter Einzeltropfen ausgebildet ist. Weiterhin verfügt die Beschichtungsstation über einen Werkstückhalter zur Fixierung der Batteriezelle.

Die Bearbeitungsstation ist mit den beschriebenen Komponenten dafür ausgebildet, ein Gehäuse einer Batteriezelle auf mindestens einer Seite zu beschichten. Die Bearbeitungsstation kann zur Beschichtung aller Seiten ausgebildet sein. Vorzugsweise findet sie jedoch Verwendung im Zusammenspiel mit einer zweiten Bearbeitungsstation, so kann jeder Bearbeitungsstation eine spezifische Fläche oder spezifische Flächen des Gehäuses zugeordnet sein.

Vorzugsweise ist die Beschichtungsstation mit einem Roboter ausgerüstet, an dessen Roboterarm der Beschichtungsapplikator der oben bereits beschriebenen Art vorgesehen ist. Hierdurch wird erreicht, dass das Gehäuse während der Beschichtung in feststehender Position relativ zum Roboter bzw. dessen Basis verbleiben kann. Es kann auch vorgesehen sein, dass das Gehäuse während der Beschichtungselbst gegenüber dem Roboter bewegt wird, insbesondere um eine Hochachse gedreht wird.

Wie oben bereits erläutert, ist es im Sinne einer schnellen Bearbeitung von Vorteil, wenn die Beschichtung auf gegenüberliegenden Seiten des Gehäuses mittels zweier Beschichtungsapplikatoren zeitgleich erfolgt. Hierzu verfügt die Beschichtungsstation bei einer bevorzugten Gestaltung über die genannten zwei Beschichtungsapplikatoren, die zur gemeinsamen Bewegung an einem gemeinsamen Verlagerungssystem vorgesehen sind, insbesondere an einem gemeinsamen Roboterarm. Die zwei Beschichtungsapplikatoren sind dabei vorzugsweise mit aufeinander zuweisenden Düsenöffnungen an einem gemeinsamen Träger vorgesehen.

Bei einer einfachen Gestaltung sind die zwei Beschichtungsapplikatoren in fester Relativposition an dem gemeinsamen Träger befestigt. Ihre Relativposition wird während der automatisierten Beschichtung nicht verändert, kann aber durch Änderung des Abstandes beim Rüsten der Beschichtungsstation angepasst werden.

Es kann aber auch vorgesehen sein, dass mindestens einer der Beschichtungsapplikatoren motorisch relativ zum anderen Beschichtungsapplikator beweglich ist, insbesondere linear in Ausbringungsrichtung verfahrbar ist. Dies gestattet es, ohne zusätzliche Rüstzeiten den Abstand auf das zu beschichtende Gehäuse anzupassen.

Die Beschichtungsstation verfügt üblicherweise über einen Vorratsspeicher für Beschichtungsmaterial, von dem aus der mindestens eine Beschichtungsapplikator mit flüssigem Beschichtungsmaterial gespeist wird. Dabei wird es als besonders vorteilhaft angesehen, wenn die Beschichtungsstation mindestens einen Ringkanal umfasst, der an zwei Stellen an den Vorratsspeicher angeschlossen ist, so dass Beschichtungsmaterial in den Ringkanal entnommen und aus dem Ringkanal dem Vorratsspeicher wieder zugeführt werden kann. Dieser Ringkanal belastet das Beschichtungsmaterial auf Scherung, wodurch sich die Viskosität des Beschichtungsmaterials senken lässt. Dies ist von Vorteil, um das Material durch einen beschriebenen Beschichtungsapplikator austragen zu können.

Der Ringkanal ist weiterhin vorzugsweise mit einem Versorgungskanal verbunden, durch den das Beschichtungsmaterial zum Beschichtungsapplikator geleitet werden kann. Im Versorgungskanal oder vorzugsweise im Ringkanal ist eine Pumpe, insbesondere vorzugsweise eine Membranpumpe, angeordnet, die einen Förderdruck aufbaut, mit dem das Beschichtungsmaterial zum Beschichtungsapplikator gefördert wird. Vorzugsweise liegt dieser Förderdruck bei etwa 4 bar.

Dem Vorratsspeicher ist vorzugsweise weiterhin ein Rührwerk zugeordnet, welches das Beschichtungsmaterial zum Zwecke der Vermeidung von Sedimentation umrührt. Weiterhin weist der Vorratsspeicher vorzugsweise eine Heizeinrichtung auf, welche das Beschichtungsmaterial im Vorratsspeicher erwärmt, um die Viskosität zu senken.

Es hat sich gezeigt, dass die für die Beschichtung besonders gut geeigneten Beschichtungsmaterialien sehr gleichbleibende Umgebungsparameter benötigen, um einen reproduzierbaren Austrag zu bewirken. Wenn im Ruhezustand der Beschichtungsstation Beschichtungsmaterial im Versorgungskanal verbleibt, so kann dieses üblicherweise nicht mehr zur Beschichtung verwendet werden, da sich seine Viskosität ändert und Sedimentation stattfinden kann. Vorzugsweise weist der Beschichtungsapplikator daher eine Spüleinrichtung auf, mittels der Beschichtungsmaterial aus der Düsenkammer des Beschichtungsapplikators und/oder aus dem Versorgungskanal gespült werden kann, der die Düsenkammer mit dem Vorratsspeicher oder dem Ringkanal verbindet.

Die beschriebene Beschichtungsstation kann Teil einer Beschichtungsanlage zur Aufbringung einer außenseitigen Isolationsschicht auf dem Gehäuse einer Batteriezelle sein. Diese Beschichtungsanlage weist mindestens eine erste und eine zweite Beschichtungsstation der beschriebenen Art auf. Diese Beschichtungsstationen sind dafür ausgebildet, jeweils das beschriebene Verfahren durchzuführen, wobei die Beschichtungsstationen für die Beschichtung unterschiedlicher Außenflächen derselben Gehäuse ausgebildet sind. Zusätzlich weist eine Beschichtungsanlage ein Fördersystem auf, welches zur Versorgung der Beschichtungsstationen mit zu beschichtenden Gehäusen und/oder zur Verlagerung eines zu beschichtenden Gehäuses von der ersten Beschichtungsstation zur zweiten Beschichtungsstation ausgebildet ist.

Als besonders vorteilhaft wird eine Gestaltung angesehen, bei der das Fördersystem einen um eine Hochachse drehbaren Rundtisch aufweist, auf dem die Gehäuse, die vorzugsweise mittels Werkstückhaltern fixiert sind, zwischen den mindestens zwei Beschichtungsstationen bewegt werden.

Zusätzlich zu den beiden Beschichtungsstationen kann es weitere Beschichtungsstationen geben. Auch die Trocknung, insbesondere über UV-Licht, erfolgt vorzugweise an einer separaten Station, die insbesondere auch am Rundtisch angeordnet ist. Weiterhin kann auch die Qualitätskontrolle mittels einer Messstation zur Schichtdickenmessung sich hier anschließen.

Die Werkstückhalter, mittels derer die Werkstücke auf dem Rundtisch fixiert sind, können zum Zwecke der Beschichtung, der Trocknung oder der Schichtdickenmessung motorisch drehbar ausgebildet sein.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.

Die Figuren 1 bis 3 zeigen eine Kfz-Batterie sowie eine Einzelzelle dieser Kfz-Batterie und deren Gehäuse.

Die Fig. 4 bis 5 verdeutlichen das erfindungsgemäße Beschichtungsverfahren zur Beschichtung des Gehäuses mittels eines Beschichtungsapplikators, der zur Abgabe diskreter Einzeltropfen ausgebildet ist.
Fig. 6 zeigt mögliche Bahnen des Beschichtungsapplikators zur Beschichtung des Gehäuses.
Fig. 7 zeigt eine Bearbeitungsstation zur Durchführung des Beschichtungsverfahrens.
Fig. 8 zeigt in schematischer Darstellung den verwendeten Beschichtungsapplikator.
Fig. 9 und 10 zeigen eine Bearbeitungsstation und den Beschichtungsvorgang bei gleichzeitiger Verwendung von zwei Applikatoren.
Fig. 11 zeigt eine Beschichtungsanlage mit einer Mehrzahl von Beschichtungsstationen und weiteren Stationen.

### DETAILLIERTE BESCHREIBUNG DER AUSFÜHRUNGSBEISPIELE

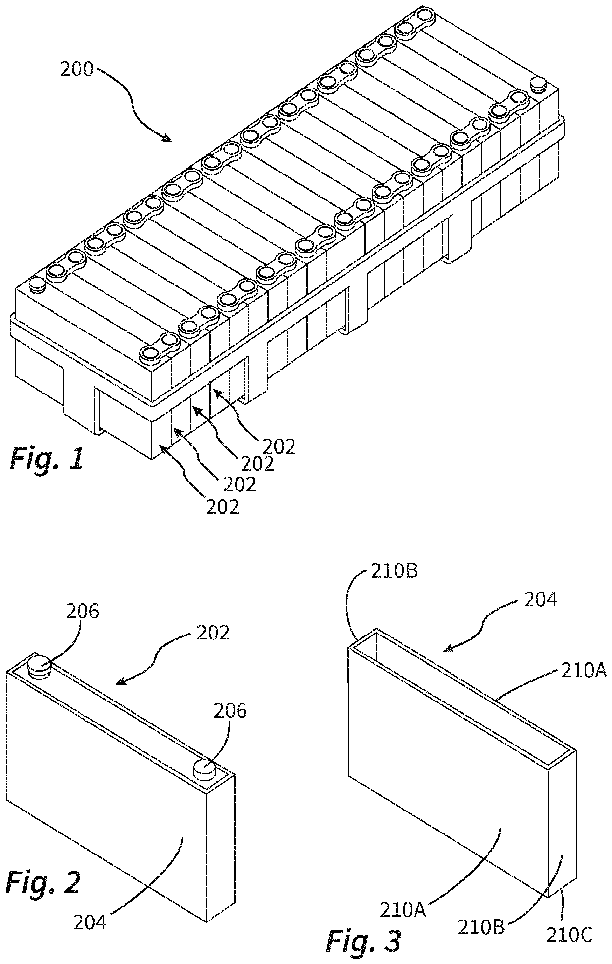

Figur 1 zeigt eine Kfz-Batterie 200. Diese umfasst eine Vielzahl von Batteriezellen 202, die jeweils über ein prismatisches Gehäuse verfügen. Die Batteriezellen 202 liegen mit Außenflächen 210A ihrer jeweiligen Gehäuse 204 bündig aneinander an.

Um im Falle der Beschädigung einer Batteriezelle 202 zu verhindern, dass der Schaden weitere Batteriezellen in Mitleidenschaft zieht, ist vorgesehen, dass die Außenflächen 210A, 210B, 210C der Gehäuse 204 jeweils mit einer Isolationsschicht aus einem ausgehärteten Beschichtungsmaterial versehen werden. Diese Beschichtung kann entweder nach abgeschlossener Montage der Batteriezelle und somit im Zustand der Fig. 2 erfolgen. Die Beschichtung kann alternativ jedoch auch vor der Montage erfolgen, so dass zu diesem Zeitpunkt das Gehäuse 204 in der in Fig. 3 dargestellten Weise noch leer ist. Das zu beschichtende Gehäuse 204 ist üblicherweise aus Aluminium oder einer Aluminiumlegierung gefertigt.

Insbesondere, wenn die Batteriezelle 202 bereits fertig montiert ist, ist die Gefahr bei der Beschichtung mit klassischen Beschichtungsverfahren mit versprühtem Beschichtungsmaterial groß, dass neben den bestimmungsgemäß zu beschichtenden Außenflächen 210A, 210B, 210C auch die Polelemente 206 der Batterie partiell beschichtet werden, was nicht gewünscht ist und zu aufwändiger Nacharbeit führt.

Gemäß dem erfindungsgemäßen Verfahren ist daher vorgesehen, dass die Beschichtung mit einem Beschichtungsapplikator erfolgt, derzurzielgerichteten Abgabe von Einzeltropfen ausgebildet ist.

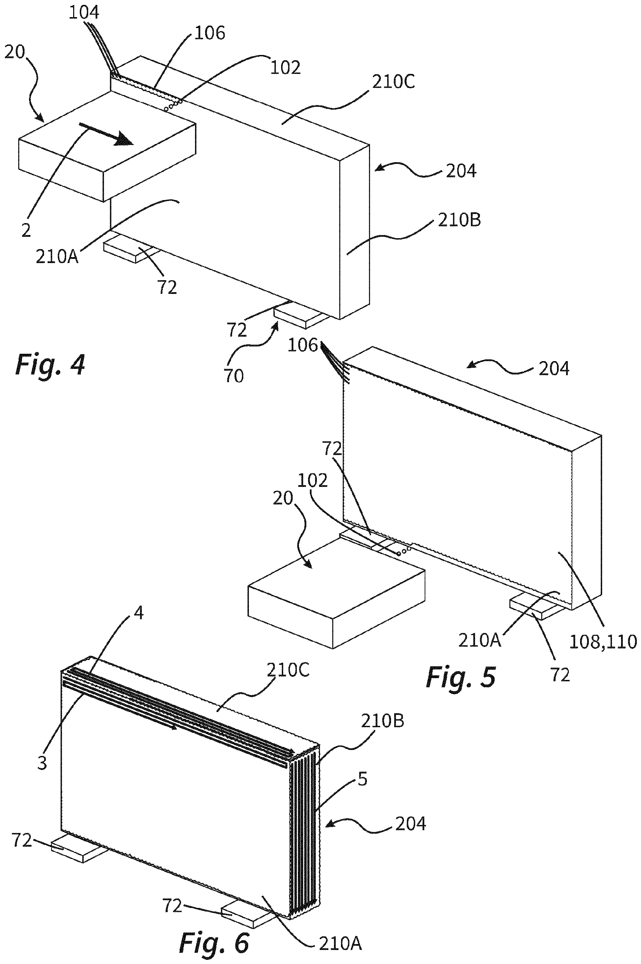

Die Figuren 4 und 5 verdeutlichen dieses Verfahren. Das Verfahren sieht vor, dass die Batteriezelle 202 oder zumindest ihr Gehäuses 204 mittels eines Werkstückhalters 70 und zum Erfassen der Polelemente 206 vorgesehener Haltelemente 72 fixiert wird. Anschließend wird ein Beschichtungsapplikator 20, der im Weiteren noch detaillierter erläutert wird, in unmittelbarer Nähe der zu beschichtenden Oberfläche positioniert, im Falle der Anordnung der Fig. 4 also unmittelbar vor der Außenfläche 210A. Der Abstand zwischen einer in Fig. 4 nicht dargestellten Düsenöffnung 24 des Beschichtungsapplikators 20 und der zu beschichtenden Oberfläche liegt vorzugweise bei einigen Millimetern, vorliegend bei etwa 5 mm.

Ausgehend von einer Startposition erfolgt dann der Austrag, indem der Beschichtungsapplikator mit hoher Frequenz diskrete Einzeltropfen von weniger als 1 mm³ Volumen erzeugt, die in definierter Richtung in Richtung der Außenfläche 210A abgegeben werden und beim Aufprall auf die Oberfläche dort einen Beschichtungspunkt 104 von etwa 1 bis 2 mm Durchmesser bilden. Dabei verbleibt das Gesamtvolumen des Beschichtungsmaterials auf der Oberfläche. Ein Sprühnebel ergibt sich bei geeigneter Wahl der Betriebsparameter des Beschichtungsapplikators nicht.

Während oder nach dem Austrag eines Einzeltropfens 102 und der damit bewirkten Bildung eines Beschichtungspunktes auf der Außenfläche 210A wird der Beschichtungsapplikator 20 gegenüber der Außenfläche 210A verlagert, wie durch den Pfeil 2 verdeutlicht und im Weiteren noch genauer erläutert wird. Während dieser Bewegung werden fortgesetzt weitere diskrete Einzeltropfen 102 in Richtung der Oberfläche abgegeben, wobei die Frequenz, die Tropfengröße und die Geschwindigkeit des Beschichtungsapplikators 20 derart aufeinander abgestimmt sind, dass die Beschichtungspunkte 104 sich überlappen und damit eine durchgehende Beschichtungslinie 106 bilden.

Wie anhand der Fig. 5 ersichtlich ist, wird durch weitere Beschichtungslinien 106, die überlappend mit vorangegangenen Beschichtungslinien 106 aufgebracht werden, eine zusammenhängende Beschichtungsfläche 108 gebildet.

Dieser Vorgang wird für alle zu beschichtenden Außenflächen 210A, 210B, 210C wiederholt, so dass schlussendliche die genannten Flächen jeweils vollständig oder teilweise von Beschichtungsflächen 108 überdeckt sind. Fig. 6 zeigt das Gehäuse 204 nach Abschluss der Beschichtung.

Wenngleich die Qualität der Beschichtung in Hinblick auf Einheitlichkeit der Schichtdicke am höchsten ist, wenn der Austrag auf eine horizontale Oberfläche erfolgt, wie es vorliegend bei der Außenfläche 210C der Fall ist, hat sich gezeigt, dass auch auf vertikal ausgerichteten Flächen, wie vorliegend den Außenflächen 210A, 210B, eine hohe Qualität erzielbar ist. Diese hängt jedoch auch von den der Anordnung der Bahnen 3, 5 ab, entlang derer der Beschichtungsapplikator 20 gegenüber dem Gehäuse 204 verfahren wird. Grundsätzlich gilt, dass es von Vorteil ist, wenn die einzelnen Beschichtungslinien parallel zur längsten Erstreckung der jeweils zu beschichtenden Fläche ausgerichtet sind. Im Falle der Außenfläche 210A sind die Beschichtungslinien daher horizontal ausgerichtet, während sie im Falle der Außenfläche 210B vertikal ausgerichtet sind. Insbesondere bei der Aufbringung horizontaler Beschichtungslinien 106 auf vertikal ausgerichteten Oberflächen, vorliegend also der Außenflächen 210A, hat es sich als vorteilhaft herausgestellt, wenn die Beschichtungslinien von oben nach unten untereinander gesetzt werden, wie durch die Bahn 3 verdeutlicht.

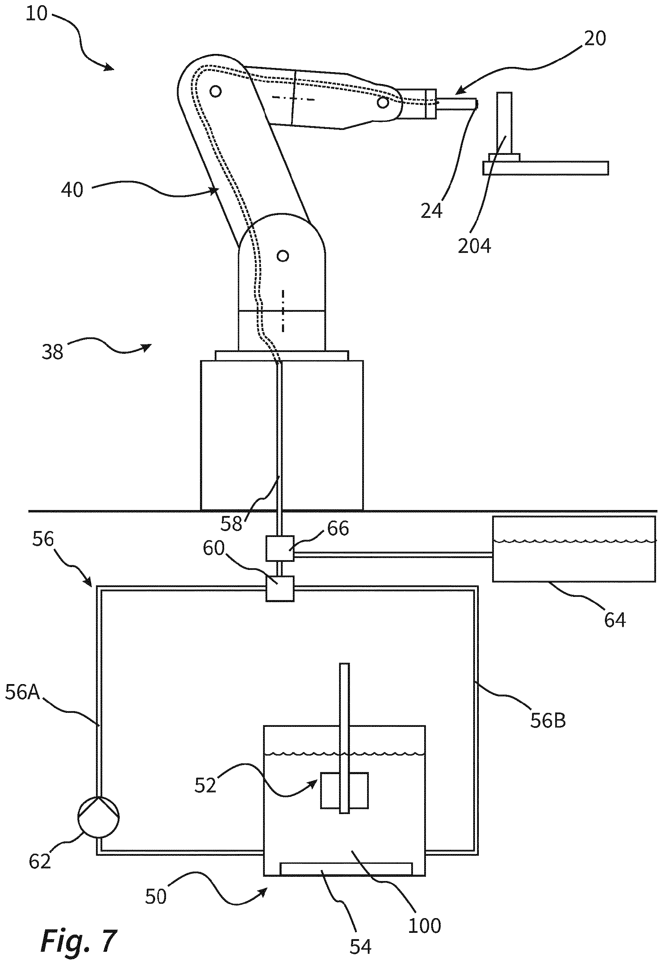

Fig. 7 zeigt den Aufbau einer Beschichtungsstation, wobei vorliegend ein Roboter 38 mit einem Roboterarm 40 Verwendung findet, um den am distalen Ende des Roboterarms 40 vorgesehenen Beschichtungsapplikator 20 zu führen. Die Versorgung des Beschichtungsapplikators 20 mit flüssigem Beschichtungsmaterial erfolgt aus einem Vorratsspeicher 50, in dem das Beschichtungsmaterial 100 vor dem Austrag gelagert wird. Da die für das erfindungsgemäße Verfahren insbesondere in Frage kommenden Beschichtungsmaterialien bei 20 °C üblicherweise ein recht hohe Viskosität aufweisen, ist der Vorratsspeicher 50 mit einer Heizeinrichtung 54 versehen, um das Beschichtungsmaterial auf einer höheren Temperatur zu halten, insbesondere auf einer Temperatur zwischen 35°C und 45°C. Alternativ oder zusätzlich können Heizeinrichtungen auch in den zum Beschichtungsapplikator führenden Kanälen oder im Beschichtungsapplikator 20 selbst vorgesehen sein. Da die für die Erfindung insbesondere geeigneten Beschichtungsmaterialen zudem zur Sedimentation neigen, also zur Ablagerung von Bestandteilen, wenn sich das flüssige Beschichtungsmaterial in Ruhe befindet, weist der Vorratsspeicher 50 zusätzlich ein Rührwerk auf, mittels dessen das Beschichtungsmaterial 100 permanent homogenisiert wird.

Zur Versorgung des Beschichtungsapplikators 20 aus dem Vorratsspeicher 50 sind verschieden Kanäle vorgesehen. Der Vorratsspeicher 50 ist mit einem Ringkanal 56 versehen, der über einen Zufuhrkanalabschnitt 56A sowie einen Rückführkanalabschnitt 56B verfügt. Das Beschichtungsmaterial 100 aus dem Vorratsspeicher wird während des Beschichtungsvorgangs, jedoch auch in kurzen Pausen des Beschichtungsvorgangs, beispielsweise beim Werkstückwechsel, mittels einer Pumpe 62 in den Zufuhrkanalabschnitt 56A eingesogen. Die Pumpe 62 bewirkt stromabwärts einen Förderdruck von etwa 4 bar.

Am Ende des Zufuhrkanalabschnitts 56A ist ein Dreiwegeventil 60 vorgesehen, mittels dessen gesteuert wird, ob das Beschichtungsmaterial durch den Rückführkanalabschnitt 56B zurück in den Vorratsspeicher 50 oder durch einen Versorgungskanal 58 in Richtung des Beschichtungsapplikators 20 gefördert wird.

Die nach Möglichkeit ununterbrochene Förderung von Beschichtungsmaterial 100 aus dem Vorratsspeicher 50, auch wenn der Austrag aus dem Beschichtungsapplikator 20 pausiert, dient insbesondere dem Zweck, eine gleichbleibende Qualität des Beschichtungsmaterials zu gewährleisten. Das im Kreislauf des Vorratsspeichers 50 und des Ringkanals 56 zirkulierende Beschichtungsmaterial 100 wird im Ringkanal 56 auf Scherung beansprucht, wodurch seine Viskosität sinkt. In jenem Teil der Kanäle zum Beschichtungsapplikator 20, der nicht Teil des Ringkanals 56 ist, verbleibt das Beschichtungsmaterial 100 dagegen bewegungslos, wenn der Beschichtungsapplikator deaktiviert ist. Je nach Art des Beschichtungsmaterials ist dies üblicherweise für einige Minuten unkritisch. Verbleibt das Beschichtungsmaterial 100 jedoch zu lange im Versorgungskanal 58, so kommt es zur Viskositätserhöhung und/oder zur Sedimentation, so dass das Beschichtungsmaterial für die Beschichtung nicht mehr verwendet werden sollte.

Das System verfügt daher über eine Spüleinrichtung, die eine Spülpumpe 66 umfasst, die Reinigungsflüssigkeit aus einem Spülmitteltank 64 in den Versorgungskanal 58 fördern kann, um das darin verbleibende Beschichtungsmaterial durch den Beschichtungsapplikator 20 hindurch oder eine separate Ausströmöffnung aus dem Versorgungskanal 58 zu entfernen, so dass anschließend frisches Material aus dem Ringkanal 56 dem Versorgungskanal 58 zugeführt werden kann.

Vor diesem Hintergrund ist es bevorzugenswert, den Versorgungskanal 58 möglichst kurz zu gestalten und den Ringkanal 56 möglichst nah an den Beschichtungsapplikator zu führen.

Bei einer im Weiteren noch erläuterten bevorzugten Gestaltung des Beschichtungsverfahrens finden eine Mehrzahl von Beschichtungsapplikatoren Verwendung. In einem solchen Fall wird es als bevorzugt angesehen, wenn diese an einem gemeinsamen Ringkanal 56 angeschlossen sind.

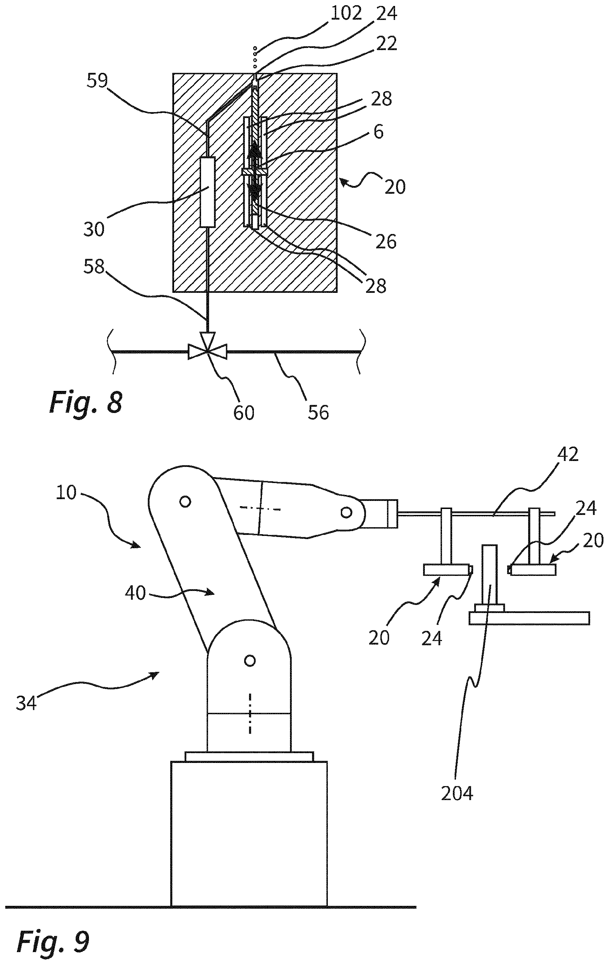

Fig. 8 zeigt in schematischer und geschnittener Darstellung einen Beschichtungsapplikator 20. Es ist zu ersehen, dass das Ende 59 des Versorgungskanals 58 innerhalb des Beschichtungsapplikator 20 verläuft, wobei hier eine weitere Heizeinrichtung 30 vorgesehen ist, um das beim nachfolgenden Austrag des Beschichtungsmaterials eine besonders einheitliche Temperatur zu gewährleisten, insbesondere zwischen 35°C und 45°C. Der Versorgungskanal 58 mündet in eine Düsenkammer 22, an die sich eine Düsenöffnung 24 anschließt. Der Austrag des Beschichtungsmaterials in Form diskreter Einzeltropfen 102 wird durch einen Stößel 26 bewirkt, der durch Piezostacks 28 in Richtung des Pfeils 6 vor- und zurückbewegt werden kann. Üblicherweise wird der Stößel mit einer Frequenz zwischen 100 Hz und 1000 Hz betrieben. Wird der Stößel aus der Düsenkammer 22 zurückgezogen, so strömt Beschichtungsmaterial 100 aus dem Versorgungskanal 58 ein, welches bei der nachfolgenden Bewegung des Stößels 26 in Richtung der Düsenkammer 22 durch die Düsenöffnung nach außen gedrückt wird und dabei einen diskreten Einzeltropfen bildet.

Es hat sich als vorteilhaft herausgestellt, wenn die Geschwindigkeit des Stößels bei zurückziehenden Bewegungen vergleichsweise gering ist, da anderenfalls die Gefahr besteht, dass Umgebungsluft durch die Düsenöffnung 24 in die Düsenkammer 22 eingesogen wird, die beim nachfolgenden Austrag die Tropfenbildung stört und/oder zu Lufteinschlüssen im Einzeltropfen 102 und nachfolgend im Beschichtungspunkt 104 führt. Dem kann zwar grundsätzlich durch einen erhöhten Druck im Versorgungskanal 58 entgegengewirkt werden. Wird hier jedoch ein Druck verwendet, der deutlich über 4 bar liegt, so besteht die Gefahr, dass der Einzeltropfen 102 beim Austrag zerrissen wird. Es ist daher bevorzugt, dass die Geschwindigkeit bei der zurückziehenden Bewegung geringer ist als bei der vorschnellenden Bewegung des Stößels 26, vorzugsweise um mindestens Faktor 2 geringer.

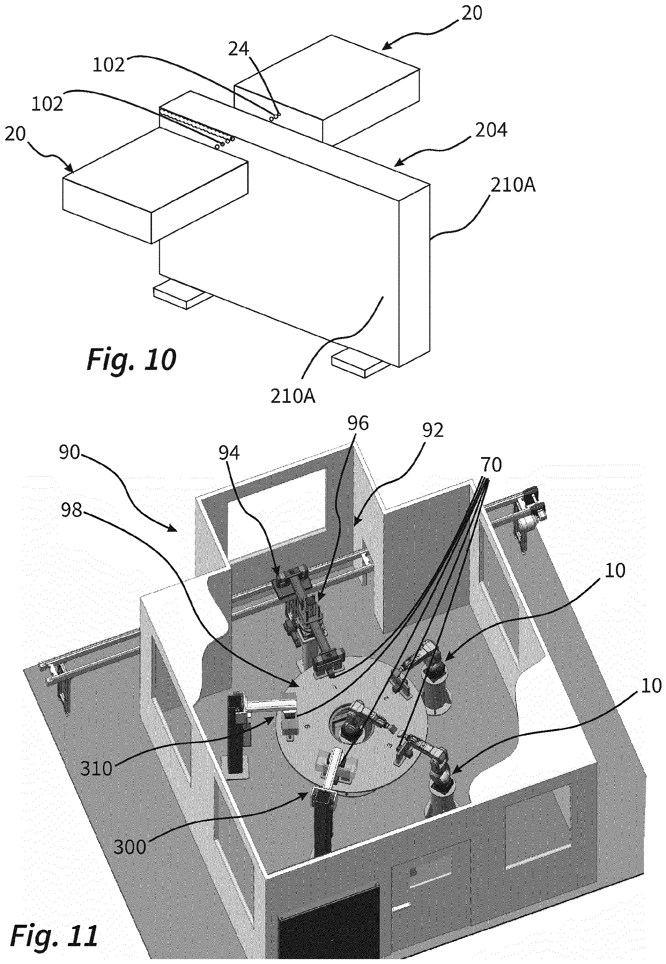

Die Figuren 9 und 10 zeigen eine ergänzte Variante des Verfahrens. Diese zeichnet sich dadurch aus, dass eine Mehrzahl von Beschichtungsapplikatoren 20, vorzugsweise genau zwei Beschichtungsapplikatoren, gemeinsam geführt werden, vorliegend durch einen gemeinsamen Roboterarm 40. Die beiden Beschichtungsapplikatoren 20 sind an einem gemeinsamen Träger 42 angebracht und mit ihren Düsenöffnungen 24 aufeinander zu weisend ausgerichtet, so dass sie zwei gegenüberliegende Seiten des Gehäuses 204 simultan beschichten können. Hierdurch sind kürzere Taktzeiten erzielbar.

Bei einer sehr einfachen Variante eines solchen Trägers 42 mit zwei Beschichtungsapplikatoren 20 sind diese nicht automatisiert verfahrbar, sondern nur beim Einrichtung der Station in Hinblick auf ihren Abstand veränderbar, um an verschiedene Maße von Gehäusen 204 angepasst zu werden. Von Vorteil ist es allerdings, wenn auch während des laufenden Betriebes der Abstand veränderlich ist, um hierdurch beispielsweise auch bei leichten Variationen bezüglich der Maße des Gehäuses oder bei der Verwendung der Beschichtungsstation für unterschiedliche Typen von Gehäusen 204 jeweils einen einheitlichen Abstand zwischen den Düsenöffnungen 24 und den jeweiligen Oberflächen gewährleisten zu können. Dieser einheitliche Abstand führt zu einem reproduzierbaren Austragsverhalten und insbesondere zu einer präzisen Einhaltung einer gewünschten Überlappung der Beschichtungspunkte 104 und der Beschichtungslinien 106.

In Fig. 10 sind die zwei Beschichtungsapplikatoren 20 während der simultanen Beschichtung im Betrieb zu sehen. Durch die Anbringung an dem gemeinsamen Träger 42 werden sie während der Beschichtung gemeinsam bewegt, so dass sie zeitgleich die jeweiligen Beschichtungspunkte 104 und Beschichtungslinien 106 auf den Außenflächen 210A des Gehäuses 204 aufbringen.

Fig. 11 zeigt eine Beschichtungsanlage 90, die in der industriellen Großserienfertigung von Elektro-Kfz Verwendung finden kann und mittels derer Gehäuse 204 von Batteriezellen 202 in einem mehrstufigen Prozess beschichtet werden.

Die Beschichtungsanlage 90 weist einen zentralen Rundtisch 98 auf, der um die Hochachse drehbar ist und über insgesamt fünf Werkstückhalter 70 verfügt. Um diesen Rundtisch 98 angeordnet sind zwei Beschichtungsstationen 10, die im Wesentlichen jener der Fig. 7 oder 9 entsprechen. Weiterhin sind hier eine Trocknungsstation 300 sowie eine Messstation 310 zur Messung der erzielten Schichtdicke vorgesehen. Der drehbare Rundtisch 98 ist Teil eines Fördersystems 92, welches weiterhin einen Transportroboter 96 aufweist, der Batteriezellen 202 oder Gehäuse 204 von einem Förderstrang 94 entnimmt und auf einem der Werkstückhalter 70 des Rundtisches 98 positioniert. Dabei kann der Transportroboter 96 zusätzlich dafür ausgebildet sein, nach Positionierung der Batteriezelle 202 oder des Gehäuses 204 auf dem Werkstückhalter 70 dessen genaue Position zu ermitteln, so dass insbesondere die Beschichtungsstationen 10 ihre Bahnparameter in Abhängigkeit der genauen Position der Batteriezelle 202 oder des Gehäuses 204 anpassen können. Statt einer in den Transportroboter 96 integrierten Positionserkennung kann hierfür auch eine separate Einrichtung zwischen dem Transportroboter und der ersten Beschichtungsstation 10 vorgesehen sein. Je nach erforderlicher Genauigkeit und Art der Werkstückhalter 70 kann auf eine präzise Positionsermittlung auch verzichtet werden.

Das durch den Transportroboter 96 auf dem Werkstückhalter 70 positionierte und dort mittels der Halteelementen 72 fixierte Gehäuse 204 wird durch Drehung des Rundtisches 98 im Uhrzeigersinn an die erste Beschichtungsstation und nach der dortigen Beschichtung weiter zur zweiten Beschichtungsstation verfahren. Die beiden Beschichtungsstationen bringen nacheinander in der beschriebenen Art und Weise Beschichtungen auf verschiedenen Außenflächen 210A, 210B, 210C. Die Zahl der Beschichtungsstationen kann dabei je nach Art der Gehäuse angepasst werden. Nachdem das Gehäuse 204 an den Beschichtungsstationen 10 mit der Beschichtung auf den Außenflächen 210A, 210B, 210C versehen wurde, erfolgt an der Trocknungsstation 300 eine Trocknung mittels UV-Licht. Hierfür weist die Trocknungsstation 300 eine höhenveränderliche Schutzhaube auf, an deren Innenseite entsprechende UV-Lichtquellen, insbesondere UV-LEDs, vorgesehen sind. Diese senkt sich nach Zustellung des Gehäuses 204 mittels des Rundtisches 98 ab, so dass sie das Gehäuse 204 umgibt. Nach Abschluss der Trocknung wird die Schutzhaube wieder angehoben.

Anschließend erfolgt eine Prüfung der erzielten Schichtdicke an der Messstation 310. Auch diese weist zu diesem Zweck eine Haube auf, an deren Innenseite mindestens eine Messeinrichtung zur Schichtdickenmessung vorgesehen ist, wobei vorzugweise eine Mehrzahl von Messeinrichtungen zur Erfassung der Schichtdicke an unterschiedlichen Messpunkten vorgesehen sein kann. Die Messung erfolgt vorzugsweise induktiv.

Abschließend wird das Gehäuse mittels des Rundtisches 98 wieder in den Bereich des Transportroboters 96 bewegt. Dort werden die Halteelemente 72 des Werkstückhalters 70 gelöst und das Gehäuse 204 bzw. die Batteriezelle 202 zurück zum Förderstrang 94 transportiert, während gleichzeitig ein weiteres Gehäuse 204 oder eine weitere Batteriezelle dem Förderstrang 94 entnommen wird und zur Beschichtung dem Rundtisch 98 zugeführt wird.

## Patentansprüche

1. Verfahren zur Aufbringung einer außenseitigen Isolationsschicht (110) auf dem Gehäuse (204) einer Batteriezelle (202) mit den folgenden Merkmalen:
a. die Beschichtung erfolgt mit einem flüssigen elektrisch isolierenden Beschichtungsmaterial (100), und
b. die Beschichtung erfolgt unter Verwendung eines Beschichtungsapplikators (20) durch Aufbringung diskret erzeugter Einzeltropfen (102) des Beschichtungsmaterials (100), die auf einer Außenfläche (210A, 210B, 210C) des vorzugsweise prismatischen Gehäuses (204) Beschichtungspunkte (104) bilden, und
c. die Beschichtungspunkte (104) werden mittels des Beschichtungsapplikators (20) sequentiell aneinander angrenzend oder überlappend aufgebracht, so dass sie gemeinsam Beschichtungslinien (106) bilden.

2. Verfahren nach Anspruch 1 mit dem folgenden weiteren Merkmal:
a. die Beschichtung erfolgt flächig, indem eine Vielzahl von Beschichtungslinien (106) sequentiell nebeneinander aufgebracht werden und somit eine zusammenhängende Beschichtungsfläche (108) bilden.

3. Verfahren nach Anspruch 1 oder 2 mit dem folgenden weiteren Merkmal:
a. die Beschichtung von zwei einander gegenüberliegenden Außenflächen (210A, 210B) erfolgt zeitgleich mittels zweier Beschichtungsapplikatoren (20).

4. Verfahren nach einem der vorstehenden Ansprüche mit dem folgenden weiteren Merkmal:
a. das Gehäuse (204) wird während der Beschichtung von einen Werkstückhalter (70) gehalten, der hierfür zwei Halteelemente (72) aufweist, die die Batteriezelle im Bereich von Polelementen fixieren.

5. Verfahren nach einem der vorstehenden Ansprüche mit mindestens einem der folgenden weiteren Merkmale:
a. mindestens auf einer planen Außenfläche (210A) des Gehäuses (204) erfolgt die Beschichtung bei vertikaler Ausrichtung dieser Außenfläche (210A), wobei horizontale Beschichtungslinien (106) vorzugsweise nacheinander von oben nach unten aufgebracht werden, und/oder
b. mindestens auf einer planen Außenfläche (210B) des Gehäuses (204) erfolgt die Beschichtung bei vertikaler Ausrichtung dieser Außenfläche (210B), wobei Beschichtungslinien (106) vertikal ausgerichtet aufgebracht werden, und/oder
c. mindestens auf einer planen Außenfläche (210C) des Gehäuses (204) erfolgt die Beschichtung bei horizontaler Ausrichtung und nach oben weisender Orientierung dieser Außenfläche (210C).

6. Verfahren nach einem der vorstehenden Ansprüche mit mindestens einem der folgenden weiteren Merkmale:
a. das Beschichtungsmaterial (100) umfasst mindestens eine unter Strahlung, insbesondere unter UV-Strahlung, aushärtende Komponente und/oder
b. das Beschichtungsmaterial (100) umfasst eine durch Polyaddition oder Polykondensation aushärtende Komponente und/oder
c. das Beschichtungsmaterial (100) umfasst eine Komponente, die sowohl durch Polyaddition oder Polykondensation aushärtet als auch Strahlung zum Aushärten benötigt.

7. Verfahren nach einem der vorstehenden Ansprüche mit dem folgenden weiteren Merkmal:
a. derAustrag erfolgt mittels eines Beschichtungsapplikators (20), der eine Düsenkammer (22) und eine sich daran stromabwärts anschließende Düsenöffnung (24) sowie einen verlagerbaren Stößel (26) aufweist, der periodisch entlang seiner Längsachse in die Düsenkammer (22) einrückt und dabei deren Inhalt als diskreten Einzeltropfen (102) durch die Düsenöffnung (24) drückt,
vorzugsweise mit dem folgenden zusätzlichen Merkmale
a. der Stößel (26) wird mit einer Frequenz zwischen 100 Hz bis 1000 Hz, vorzugsweise zwischen 200 Hz und 400 Hz bewegt.

8. Verfahren nach einem der vorstehenden Ansprüche mit mindestens einem der folgenden weiteren Merkmale:
a. die Beschichtung erfolgt mit Einzeltropfen (102, 122), die ein Tropfenvolumen zwischen 0,2 mm³ und 1,0 mm³ aufweisen, und/oder
b. die Beschichtungspunkte (104) weisen eine Maximaldicke zwischen 50 µm und 100 µm auf, wobei sie vorzugsweise derart überlappend angeordnet werden, dass sich eine mittlere Schichtdicke zwischen 60 µm und 120 µm ergibt, und/oder
c. die Beschichtungspunkte (104) weisen einen Durchmesser zwischen 1 mm und 2 mm auf, und/oder
d. die Beschichtung erfolgt durch eine Düsenöffnung (24) mit einem Düsendurchmesser zwischen 0,2 mm und 0,8 mm, vorzugsweise vom 0,5 mm, und/oder
e. die Beschichtung erfolgt bei einem Abstand zwischen der Düsenöffnung (24) und der zu beschichtenden Außenfläche (210A, 210B, 210C) zwischen 3 mm und 8 mm, vorzugsweise zwischen 4 mm und 6 mm, und/oder
f. die Zuführung des Beschichtungsmaterials (100) in die Düsenkammer (22) erfolgt mit einem Druck zwischen 3 bar und 5 bar, und/oder
g. die Relativgeschwindigkeit zwischen Beschichtungsapplikator (20) und einer Außenfläche (210A, 210B, 210C) während der Ausbringung des Beschichtungsmaterials beträgt vorzugsweise zwischen 300 mm/sec und 700 mm/sec und/oder
h. das Beschichtungsmaterial (100) wird vor dem Austrag auf eine Temperatur zwischen 35 °C und 45 °C erwärmt, vorzugsweise mittels einer im Beschichtungsapplikator (20) vorgesehenen Heizeinrichtung (30).

## Claims

1. Method of applying an outer insulation layer (110) on the housing (204) of a battery cell (202), having the following features:
a. the coating is effected with a liquid, electrically insulating coating material (100), and
b. the coating is effected using a coating applicator (20) by applying discretely generated individual droplets (102) of the coating material (100) that form coating dots (104) on an outer face (210A, 210B, 210C) of the preferably prismatic housing (204), and
c. the coating dots (104) are sequentially applied by means of the coating applicator (20) in a mutually adjoining or overlapping manner, such that they collectively form coating lines (106).

2. Method according to Claim 1, having the following further feature:
a. the coating is effected over an area by sequentially applying a multitude of coating lines (106) alongside one another and hence forming a coherent coating area (108).

3. Method according to Claim 1 or 2, having the following further feature:
a. the coating of two opposite outer faces (210A, 210B) is effected simultaneously by means of two coating applicators (20).

4. Method according to any of the preceding claims, having the following further feature:
a. the housing (204) is held during the coating operation by a workpiece holder (70) that has two holding elements (72) for the purpose that fix the battery cell in the region of the pole elements.

5. Method according to any of the preceding claims, having at least one of the following further features:
a. the coating is effected at least on a planar outer surface (210A) of the housing (204) with vertical alignment of said outer surface (210A), with application of horizontal coating lines (106), preferably successively from the top downward, and/or
b. the coating is effected at least on a planar outer surface (210B) of the housing (204) with vertical alignment of said outer surface (210B), with application of coating lines (106) in vertical alignment, and/or
c. the coating is effected at least on a planar outer surface (210C) of the housing (204) with horizontal alignment and upward orientation of said outer surface (210C).

6. Method according to any of the preceding claims, having at least one of the following further features:
a. the coating material (100) comprises at least one component that cures under radiation, especially under UV radiation, and/or
b. the coating material (100) comprises a component that cures by polyaddition or polycondensation and/or
c. the coating material (100) comprises a component that both cures through polyaddition or polycondensation and requires radiation for curing.

7. Method according to any of the preceding claims, having the following further feature:
a. the application is effected by means of a coating applicator (20) that has a nozzle chamber (22) and a nozzle opening (24) that follows downstream and an extendable plunger (26) that periodically moves into the nozzle chamber (22) along its longitudinal axis and as it does so forces the contents thereof through the nozzle opening (24) as discrete individual droplets (102),
preferably with the following additional features:
a. the plunger (26) is moved with a frequency between 100 Hz and 1000 Hz, preferably between 200 Hz and 400 Hz.

8. Method according to any of the preceding claims, having at least one of the following further features:
a. the coating is effected with individual droplets (102, 122) having a droplet volume between 0.2 mm³ and 1.0 mm³, and/or
b. the coating dots (104) have a maximum thickness between 50 µm and 100 µm, wherein they are preferably arranged in such an overlapping manner as to result in an average layer thickness between 60 µm and 120 µm, and/or
c. the coating dots (104) have a diameter between 1 mm and 2 mm, and/or
d. the coating is effected through a nozzle opening (24) having a nozzle diameter between 0.2 mm and 0.8 mm, preferably of 0.5 mm, and/or
e. the coating is effected at a distance between the nozzle opening (24) and the outer surface (210A, 210B, 210C) to be coated of between 3 mm and 8 mm, preferably between 4 mm and 6 mm, and/or
f. the coating material (100) is fed into the nozzle chamber (22) at a pressure between 3 bar and 5 bar, and/or
g. the relative speed between coating applicator (20) and an outer surface (210A, 210B, 210C) during the deployment of the coating material is preferably between 300 mm/sec and 700 mm/sec, and/or
h. the coating material (100) is heated prior to application to a temperature between 35°C and 45°C, preferably by means of a heating device (30) provided in the coating applicator (20).

## Revendications

1. Procédé pour l'application d'une couche d'isolation extérieure (110) sur le boîtier (204) d'une cellule de batterie (202), présentant les caractéristiques suivantes :
a. le revêtement a lieu avec un matériau de revêtement électriquement isolant liquide (100), et
b. le revêtement a lieu en utilisant un applicateur de revêtement (20) par application de gouttes individuelles générées discrètement (102) du matériau de revêtement (100), qui forment sur une surface extérieure (210A, 210B, 210C) du boîtier de préférence prismatique (204) des points de revêtement (104), et
c. les points de revêtement (104) sont appliqués séquentiellement adjacents les uns aux autres ou en chevauchement au moyen de l'applicateur de revêtement (20), de telle sorte qu'ils forment conjointement des lignes de revêtement (106).

2. Procédé selon la revendication 1, présentant la caractéristique supplémentaire suivante :
a. le revêtement a lieu de manière surfacique, en appliquant une pluralité de lignes de revêtement (106) séquentiellement les unes à côté des autres et en formant ainsi une surface de revêtement continue (108).

3. Procédé selon la revendication 1 ou 2, présentant la caractéristique supplémentaire suivante :
a. le revêtement de deux surfaces extérieures opposées l'une à l'autre (210A, 210B) a lieu simultanément au moyen de deux applicateurs de revêtement (20).

4. Procédé selon l'une quelconque des revendications précédentes, présentant la caractéristique supplémentaire suivante :
a. le boîtier (204) est maintenu pendant le revêtement par un porte-pièce (70), qui comprend pour cela deux éléments de maintien (72), qui fixent la cellule de batterie dans la zone d'éléments polaires.

5. Procédé selon l'une quelconque des revendications précédentes, présentant au moins une des caractéristiques supplémentaires suivantes :
a. au moins sur une surface extérieure plane (210A) du boîtier (204), le revêtement a lieu avec un alignement vertical de cette surface extérieure (210A), des lignes de revêtement horizontales (106) étant de préférence appliquées les unes après les autres du haut vers le bas, et/ou
b. au moins sur une surface extérieure plane (210B) du boîtier (204), le revêtement a lieu avec un alignement vertical de cette surface extérieure (210B), des lignes de revêtement (106) étant appliquées alignées verticalement, et/ou
c. au moins sur une surface extérieure plane (210C) du boîtier (204), le revêtement a lieu avec un alignement horizontal et une orientation tournée vers le haut de cette surface extérieure (210C).

6. Procédé selon l'une quelconque des revendications précédentes, présentant au moins une des caractéristiques supplémentaires suivantes :
a. le matériau de revêtement (100) comprend au moins un composant durcissant sous un rayonnement, notamment sous un rayonnement UV, et/ou
b. le matériau de revêtement (100) comprend un composant durcissant par polyaddition ou polycondensation, et/ou
c. le matériau de revêtement (100) comprend un composant qui durcit par polyaddition ou polycondensation, et nécessite également un rayonnement pour le durcissement.

7. Procédé selon l'une quelconque des revendications précédentes, présentant la caractéristique supplémentaire suivante :
a. l'application a lieu au moyen d'un applicateur de revêtement (20), qui comprend une chambre à buse (22) et une ouverture de buse contiguë à celle-ci en aval (24), ainsi qu'un poussoir déplaçable (26), qui entre périodiquement le long de son axe longitudinal dans la chambre de buse (22) et pousse ainsi son contenu sous la forme de gouttes individuelles discrètes (102) au travers de l'ouverture de buse (24),
de préférence présentant la caractéristique supplémentaire suivante :
a. le poussoir (26) est déplacé avec une fréquence comprise entre 100 Hz et 1 000 Hz, de préférence entre 200 Hz et 400 Hz.

8. Procédé selon l'une quelconque des revendications précédentes, présentant au moins une des caractéristiques supplémentaires suivantes :
a. le revêtement a lieu avec des gouttes individuelles (102, 122) qui présentent un volume de goutte compris entre 0,2 mm³ et 1,0 mm³, et/ou
b. les points de revêtement (104) présentent une épaisseur maximale comprise entre 50 µm et 100 µm, ceux-ci étant de préférence agencés en chevauchement de manière à obtenir une épaisseur de couche moyenne comprise entre 60 µm et 120 µm, et/ou
c. les points de revêtement (104) présentent un diamètre compris entre 1 mm et 2 mm, et/ou
d. le revêtement a lieu au travers d'une ouverture de buse (24) ayant un diamètre de buse compris entre 0,2 mm et 0,8 mm, de préférence de 0,5 mm, et/ou
e. le revêtement a lieu à un écart entre l'ouverture de buse (24) et la surface extérieure à revêtir (210A, 210B, 210C) compris entre 3 mm et 8 mm, de préférence entre 4 mm et 6 mm, et/ou
f. l'acheminement du matériau de revêtement (100) dans la chambre de buse (22) a lieu avec une pression comprise entre 3 bar et 5 bar, et/ou
g. la vitesse relative entre l'applicateur de revêtement (20) et une surface extérieure (210A, 210B, 210C) pendant l'application du matériau de revêtement est de préférence comprise entre 300 mm/s et 700 mm/s, et/ou
h. le matériau de revêtement (100) est porté avant l'application à une température comprise entre 35 °C et 45 °C, de préférence au moyen d'un dispositif de chauffage (30) prévu dans l'applicateur de revêtement (20) .
